# EUROPÄISCHE PATENTSCHRIFT

(11) **EP 0 562 161 B1**
(45) Veröffentlichungstag und Bekanntmachung des Hinweises auf die Patenterteilung: **20.09.1995**
(21) Anmeldenummer: 92118709.2
(22) Anmeldetag: 02.11.1992
(51) Int. Cl.: F16F 7/10, F16F 1/36

(54) **Schwingungstilger**
Vibration damper
Amortisseur de vibrations

(30) Priorität: 25.03.1992 DE 4209610
(43) Veröffentlichungstag der Anmeldung: 29.09.1993
(73) Patentinhaber: Firma Carl Freudenberg, 69469 Weinheim (DE)
(72) Erfinder: Grunau, Rudi, W-6080 Gross-Gerau (DE); Hönlinger, Herwig, W-6845 Gross-Rohrheim (DE); Morr, Jürgen, W-6948 Wald-Michelbach 5 (DE)

(56) Entgegenhaltungen:
- EP-A- 0 480 460
- DE-C- 4 120 840
- GB-A- 763 753
- US-A- 4 610 420
- PATENT ABSTRACTS OF JAPAN vol. 10, no. 171 (M-489)(2227) 17. Juni 1986 & JP-A-61 021 443 (MAZDA K.K.) 30. Januar 1986

## Beschreibung

Die Erfindung betrifft einen Schwingungstilger, umfassend eine an zumindest einem Federelement aus elastomerem Werkstoff beweglich angeordnete Tilgermasse, die phasenverschoben zu betriebsbedingt eingeleiteten Schwingungen in Bewegung versetztbar ist, wobei das Federelement an einem die Schwingungen erzeugenden Teil festgelegt ist.

Solche Schwingungstilger sind in den verschiedensten Ausführungen bekannt, z.b. GB-A-763 753 wobei die zur Anwendung gelangende Tilgermasse und die Federsteifigkeit des zur Anwendung gelangenden Federelementes auf die jeweilige Frequenz der zu tilgenden Schwingung abgestimmt sind. Dabei ist allerdings zu beachten, daß das elastomere Federelement temperaturabhängig seine Federsteifigkeit ändert. Die daraus resultierende Verschiebung der Eigenfrequenz des Schwingungstilgers in Bereiche, in denen eine Schwingungstilgung nicht erforderlich/unerwünscht ist, ist wenig befriedigend.

Der Erfindung liegt die Aufgabe zugrunde, einen Schwingungstilger der eingangs genannten Art derart weiterzuentwickeln, daß Temperaturschwankungen des Federelementes auf die Eigenfrequenz des Schwingungstilgers keinen Einfluß haben.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei dem erfindungsgemäßen Schwingungstilger ist es vorgesehen, daß dem Federelement zur Kompensation von Temperatureinflüssen eine Zusatzfeder in einer Parallelschaltung zugeordnet ist, deren Federsteifigkeit durch ein Hilfsmittel veränderbar ist. Durch diese Ausgestaltung sind die Eigenfrequenzen schwingungsfähiger Systeme, deren Federn durch Elastomere gebildet sind, temperaturunabhängig. Ein derartig ausgebildeter Schwingungstilger ist insbesondere dann sinnvoll, wenn die zu tilgende Frequenz innerhalb eines schmalen Frequenzbandes liegt. Dadurch, daß sich die Eigenfrequenz des Schwingungstilger stets in diesem schmalen Frequenzband befinden soll, können in diesem Bereich auftretende Schwingungen unabhängig von der Temperatur des Federelementes ausgeglichen werden. In Abhängigkeit von der Temperatur des Federelementes ist die Tilgermasse an dem Federelement und der parallel geschalteten Zusatzfeder aufgehängt oder, in höheren Temperaturbereichen, ausschließlich an dem Federelement. Die Bereiche zwischen der höchstmöglichen Temperatur des Federelementes und der am niedrigst möglichen Temperatur des Federelementes können durch eine bevorzugte stufenlose Änderung der Federsteifigkeit der parallel geschalteten Zusatzfeder berücksichtigt werden.

Im Rahmen der vorliegenden Erfindung ist es vorgesehen, daß die Zusatzfeder mit steigender Temperatur des Federelementes eine zunehmende Federsteifigkeit aufweist. Durch diese Ausgestaltung ist gewährleistet, daß eine nachlassende Federsteifigkeit des Federelementes mit zunehmender Temperatur durch eine zunehmende Federsteifigkeit der Zusatzfeder ausgeglichen werden kann.

Gemäß einer vorteilhaften Ausgestaltung ist es vorgesehen, daß die Zusatzfeder aus gummielastischem Werkstoff besteht und daß das Hilfsmittel eine bedarfsweise quer zur Richtung der eingeleiteten Schwingungen bewegbare, im wesentlichen rohrförmige Hülse umfassen kann, die durch einen Antrieb über die Zusatzfeder bewegbar ist. Zur Funktion des erfindungsgemäßen Schwingungstilgers ist folgendes auszuführen:

Befindet sich das Schwingungen erzeugende Teile in Ruhe, belastet die Tilgermasse sowohl das Federelement als auch die Zusatzfeder statisch. Die Zusatzfeder weist die geringstmögliche Federsteifigkeit auf; die rohrförmige Hülse überdeckt die Zusatzfeder nicht. Bei betriebsbedingt eingeleiteten Schwingungen, zu denen sich die Tilgermasse bevorzugt gegenphasig bewegt, erwärmt sich das Federelement durch innere Reibung während der Gebrauchsdauer allmählich, was zu einer Verringerung der Federsteifigkeit und einer Verschiebung der zu tilgenden Frequenzen in Richtung tieffrequente Schwingungen führen würde, wenn die Federsteifigkeit der Zusatzfeder nicht relativ vergrößert würde. Im Falle der vorliegenden Ausgestaltung wird mit zunehmender Erwärmung des Federelementes die rohrförmige Hülse quer zur Richtung der eingeleiteten Schwingungen über die Zusatzfeder bewegt und verkürzt dadurch ihre Wirklänge. Eine kürzere Wirklänge bedingt eine zunehmende Federsteifigkeit, die gerade so bemessen ist, daß die temperaturbedingte verringerte Federsteifigkeit des Federelementes ausgeglichen wird. Bezüglich der Eigenfrequenz des Schwingungstilgers ist festzustellen, daß diese, unabhängig von der Temperatur des Federelementes weitgehend gleichbleibt.

Bei der maximal auftretenden Temperatur des Federelementes kann die Hülse die Zusatzfeder bedarfsweise vollständig überdecken und von dem Federelement abkoppeln, so daß die gewünschte Eigenfrequenz des Schwingungstilgers erhalten bleibt.

Der Antrieb der Hülse kann durch ein gegen eine Rückstellfeder wirkendes Dehnstoffelement gebildet sein, wobei das Dehnstoffelement bei Erwärmung ein zunehmendes und bei Abkühlung ein sich verringerndes Volumen aufweist. In Abhängigkeit des zur Anwendung gelangenden Dehnstoffes ergeben sich bei Erwärmung unterschiedlich starke Ausdehnungen zur Verschiebung der Hülse über die Zusatzfeder. Der Dehnstoff ist derart angeordnet, daß er auf der der Hülse zugewandten Seite von einer gummielastisch nachgiebigen Wandung umschlossen ist, die bei zunehmender Temperatur der Volumenvergrößerung des Dehnstoffes folgt. Die Ausdehnung des Dehnstoffes bedingt eine Verschiebung der Hülse in Richtung der Zusatzfeder. Die Verschiebung der Hülse erfolgt bevorzugt gegen die Federkraft einer Rückstellfeder, die einerseits an einem Bestandteil eines statisch ruhenden Gehäuseteiles und andererseits an der beweglichen Hülse abgestützt ist. Bei sich verringernder Temperatur und Volumenverkleinerung des Dehnstoffes bewirkt die Rückstellfeder ein Zurückführen der Hülse in Richtung ihrer Ausgangsposition und bedingt ein stetes Anliegen der Hülse an der gummielastisch nachgiebigen Wandung.

Gemäß einer anderen vorteilhaften Ausgestaltung kann der Antrieb der Hülse durch einen elektrisch betätigbaren Stellmotor gebildet sein, der mit einer Steuereinheit, die beispielsweise durch die Motorsteuerung eines Kraftfahrzeuges gebildet sein kann, und einem Temperaturfühler, der die Temperatur des Federelementes ermittelt, signalleitend verbunden ist. Ein Kennfeld zur Steuerung des Stellmotors kann beispielsweise in der Motorsteuerung abgelegt sein.

Nach einer anderen, besonders einfachen Ausgestaltung, kann der Antrieb der Hülsenfeder durch eine Bimetallfeder gebildet sein. Hierbei ist von Vorteil, daß der gesamte Schwingungstilger in wirtschaftlicher Hinsicht besonders kostengünstig herstellbar ist. Dadurch ist es möglich, daß der Schwingungstilger auch in Bereichen zur Anwendung gelangen kann, bei denen auf größtmögliche Wirtschaftlichkeit besonderes großer Wert gelegt wird.

Zur Verbesserung der Gebrauchseigenschaften während einer langen Gebrauchsdauer kann die Hülse zumindest auf der der Zusatzfeder zugewandten Innenseite mit einer reibungsvermindernden Oberflächenbeschichtung versehen sein. Neben einer präziseren Steuerung der Hülse bei geringeren Betätigungskräften durch den Antrieb können Beschädigungen der elastomeren Zusatzfeder durch diese Ausgestaltung zuverlässig verhindert werden.

Nach einer anderen Ausgestaltung kann es vorgesehen sein, daß die Hülse aus einem selbstschmierenden Kunststoff, beispielsweise aus PTFE besteht.

Der Gegenstand der vorliegenden Erfindung wird nachfolgend anhand der als Anlage beigefügten Zeichnungen weiter verdeutlicht.
In Figur 1 ist der erfindungsgemäße Schwingungstilger im montierten Zustand gezeigt,
in Figur 2 ein Ausschnitt aus Figur 1, in dem die Zusatzfeder mit ihrer größtmöglichen Wirklänge gezeigt ist und
in Figur 3 ist die durch die Hülse teilweise überdeckte Zusatzfeder gezeigt.

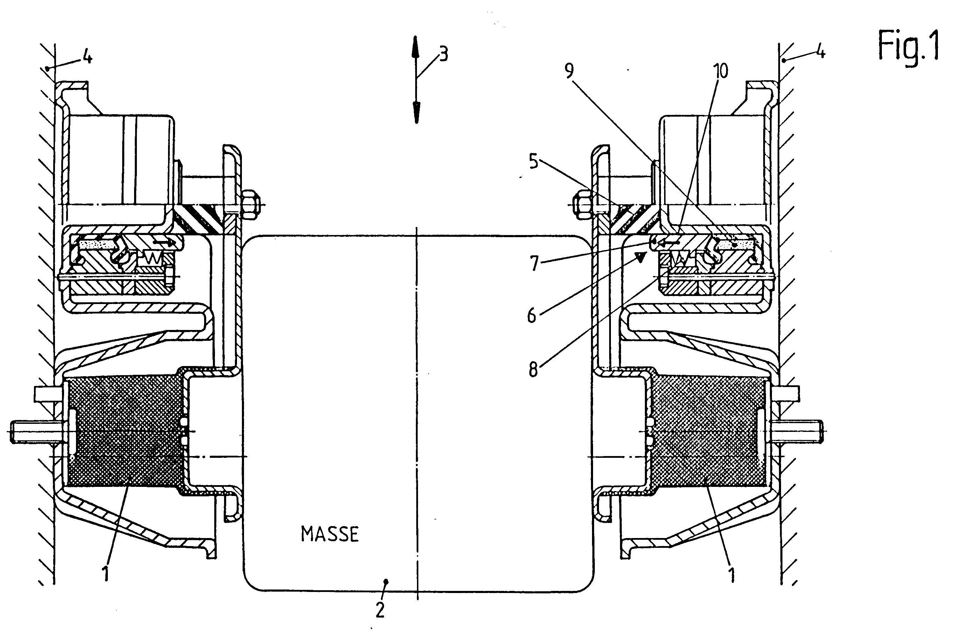

Figur 1 zeigt ein Ausführungsbeispiel des erfindungsgemäßen Schwingungstilgers in teilweise geschnittner Darstellung, wobei der Schwingungstilger zwei Federelemente 1 aus elastomerem Werkstoff umfaßt, an denen eine Tilgermasse 2 angeordnet ist, die gegenphasig zu betriebsbedingt eingeleiteten Schwingungen 3 in Bewegung versetzbar ist. Das in diesem Beispiel nur angedeutete, Schwingungen erzeugende Teil 4 kann beispielsweise durch eine Verbrennungskraftmaschine oder eine Radaufhängung eines Kraftfahrzeuges gebildet sein. Den Federelementen 1 ist jeweils zur Kompensation von Temperatureinflüssen eine Zusatzfeder 5 in einer Parallelschaltung zugeordnet, deren Federsteifigkeit sich bei zunehmender Erwärmung der Federelemente 1 vergrößert. In diesem Ausführungsbeispiel wird die Wirklänge der Zusatzfeder 5 durch eine übergeschobene, in Schwingungsrichtung starre Hülse 7 zur Vergrößerung der Federsteifigkeit bedarfsweise verringert.

Um die Eigenfrequenz des Schwingungstilgers auch bei Temperaturänderungen innerhalb der ersten Federelemente 1 gleichbleibend zu halten, ist das Hilfsmittel 6 im hier dargestellten Ausführungsbeispiel quer zur Richtung der eingeleiteten Schwingungen 3 über die Zusatzfeder 5 bewegbar. Mit steigender Temperatur innerhalb der ersten Federelemente 1 bewegt sich die Hülse 7 zunehmend über die Zusatzfeder 5, bis diese bei maximal auftretender Temperatur nahezu vollständig von der Hülse überdeckt ist. Da der hier dargestellte Antrieb der Hülse 7 durch ein Dehnstoffelement 9 gebildet ist, das in dem hier dargestellten Ausführungsbeispiel nur Druckkräfte auf die Hülse überträgt, ist es erforderlich, daß bei abnehmender Temperatur und sich verringerndem Volumen des Dehnstoffelementes 9 die Hülse 7 durch eine Rückstellfeder 8 in Richtung ihrer Ausgangsposition bewegt wird. Die Verwendung eines Dehnstoffelementes 9 als Antrieb für ein Hilfsmittel 6, beispielsweise wie hier dargestellt in Form einer Hülse 7 ist eine einfache Möglichkeit Temperatureinflüsse auf die Federelemente 1 zu kompensieren.

Andere Arten des Antriebes der Hülse können beispielsweise durch elektrisch betätigbare Stellmotoren, Bimetallfedern oder hydraulische Stelleinrichtungen gebildet sein, die im wesentlichen einen ähnlichen aufgebaut bedingen, wie das hier dargestellte Ausführungsbeispiel.

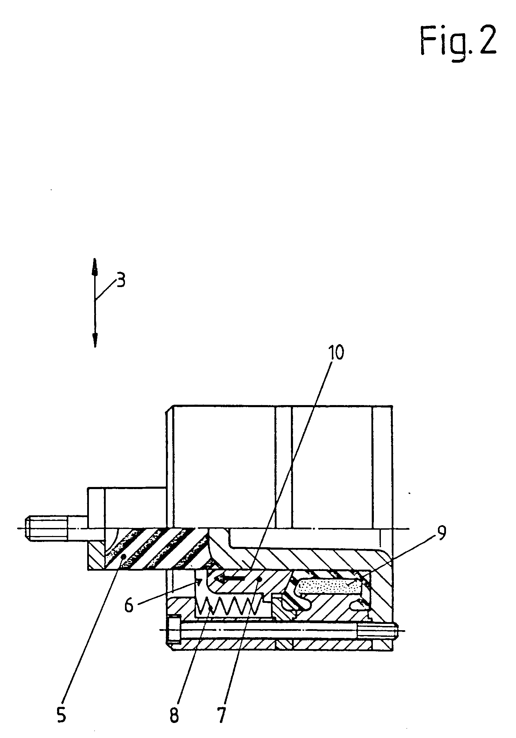

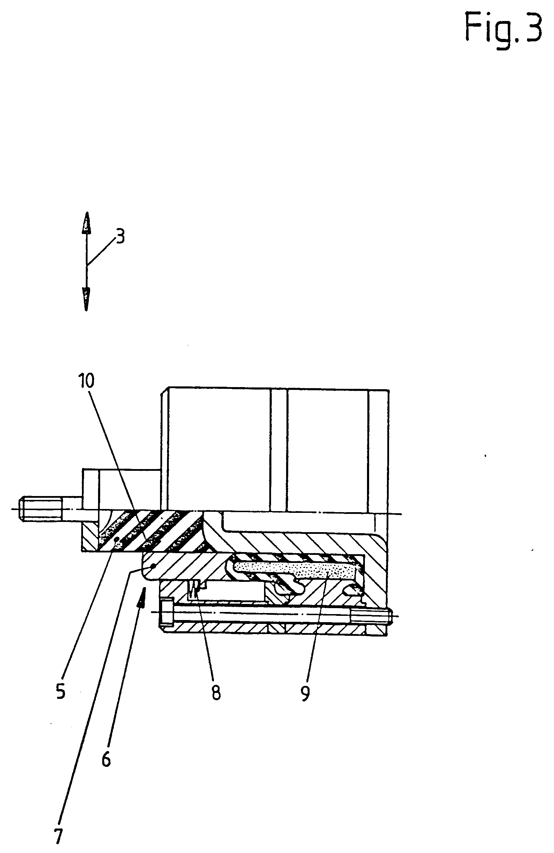

In den Figuren 2 und 3 ist die Zusatzfeder 5 und die Betätigungseinrichtung der Hülse 7 dargestellt.

In Figur 2 überdeckt die Hülse 7 die Zusatzfeder 5 nicht. Sie ist mit voller Wirklänge während der bestimmungsgemäßen Verwendung parallel zu dem in Figur 1 dargestellten Federelement 1 wirksam.

Bei zunehmender Temperatur den sich das Dehnstoffelement 9, wie in Figur 3 gezeigt, derart aus, daß sich die Hülse 7 über die Zusatzfeder 5 verschiebt und ihre Beweglichkeit in Schwingungsrichtung 3 einschränkt. In den hier dargestellten Beispielen gemäß der Figuren 1 bis 3 bleibt in jedem Betriebszustand ein Teil der Länge der Zusatzfeder 5 wirksam. Bei Verlängerung der Hülse 5 in Bewegungsrichtung und vergrößertem Bewegungshub besteht die Möglichkeit, die Zusatzfeder 5 bedarfsweise vollständig zu überdecken.

## Patentansprüche

1. Schwingungstilger, umfassend eine an zumindest einem Federelement (1) aus elastomerem Werkstoff beweglich angeordnete Tilgermasse (2), die phasenverschoben zu betriebsbedingt eingeleiteten Schwingungen in Bewegung versetzbar ist, wobei das Federelement (1) an einem die Schwingungen erzeugenden Teil (4) festgelegt ist, dadurch gekennzeichnet, daß dem Federelement (1) zur Kompensation von Temperatureinflüssen eine Zusatzfeder (5) in einer Parallelschaltung zugeordnet ist, deren Federsteifigkeit durch ein Hilfsmittel (6) veränderbar ist.

2. Schwingungstilger nach Anspruch 1, dadurch gekennzeichnet, daß die Zusatzfeder (5) mit steigender Temperatur eine zunehmende Federsteifigkeit aufweist.

3. Schwingungstilger nach Anspruch 1 bis 2, dadurch gekennzeichnet, daß die Zusatzfeder (5) aus gummielastischem Werkstoff besteht und daß das Hilfsmittel (6) eine bedarfsweise quer zur Richtung der eingeleiteten Schwingungen (3) bewegbare, im wesentlichen rohrförmige Hülse (7) umfaßt, die durch einen Antrieb über die Zusatzfeder (5) bewegbar ist.

4. Schwingungstilger nach Anspruch 3, dadurch gekennzeichnet, daß die Hülse (7) die Zusatzfeder (5) bedarfsweise vollständig überdeckt und von dem Federelement (1) abkoppelt.

5. Schwingungstilger nach Anspruch 3 bis 4, dadurch gekennzeichnet, daß der Antrieb der Hülse (7) durch ein gegen eine Rückstellfeder (8) wirkendes Dehnstoffelement (9) gebildet ist und daß das Dehnstoffelement (9) bei Erwärmung ein zunehmendes und bei Abkühlung ein sich verringerndes Volumen aufweist.

6. Schwingungstilger nach Anspruch 3 bis 4, dadurch gekennzeichnet, daß der Antrieb der Hülse (7) durch einen elektrisch betätigbaren Stellmotor gebildet ist, der mit einer Steuereinheit und einem Temperaturfühler für das Federelement (1) signalleitend verbunden ist.

7. Schwingungstilger nach Anspruch 3 bis 4, dadurch gekennzeichnet, daß der Antrieb der Hülse (7) durch eine Bimetallfeder gebildet ist.

8. Schwingungstilger nach Anspruch 3 bis 7, dadurch gekennzeichnet, daß die Hülse (7) zumindest auf der der Zusatzfeder (5) zugewandten Innenseite (10) mit einer reibungsvermindernden Oberflächenbeschichtung versehen ist.

9. Schwingungstilger nach Anspruch 3 bis 8, dadurch gekennzeichnet, daß die Hülse (7) aus einem selbstschmierenden Kunststoff besteht.

## Claims

1. A vibration damper, comprising a damping mass (2) which is arranged movably on at least one spring element (1) of elastomer material and can be set in motion in phase shift relative to vibrations introduced due to operation, the spring element (1) being fixed on a part (4) which generates the vibrations, characterized in that an additional spring (5) is assigned in a parallel disposition to the spring element (1) to compensate temperature effects, the rigidity of which additional spring can be varied by an auxiliary means (6).

2. A vibration damper according to Claim 1, characterized in that, with a rising temperature, the additional spring (5) has an increasing rigidity.

3. A vibration damper according to either of Claims 1 and 2, characterized in that the additional spring (5) consists of rubber-elastic material, and in that the auxiliary means (6) comprises an essentially tubular sleeve (7) which can be moved, if required, transversely to the direction of the vibrations (3) introduced and can be moved via the additional spring (5) by means of a drive.

4. A vibration damper according to Claim 3, characterized in that the sleeve (7) completely covers the additional spring (5), if required, and is disconnected from the spring element (1).

5. A vibration damper according to either of Claims 3 and 4, characterized in that the drive of the sleeve (7) is formed by an expansion-material element (9) which acts counter to a restoring spring (8), and in that the expansion-material element (9), when heated, has an increasing volume and, when cooled, a decreasing volume.

6. A vibration damper according to either of Claims 3 and 4, characterized in that the drive of the sleeve (7) is formed by an electrically actuable adjusting motor which is connected in terms of signal conduction to a control unit and a temperature sensor for the spring element (1).

7. A vibration damper according to either of Claims 3 and 4, characterized in that the drive of the sleeve (7) is formed by a bimetal spring.

8. A vibration damper according to any of Claims 3 to 7, characterized in that the sleeve (7) is provided with a friction-reducing surface coating at least on the inner side (10) facing the additional spring (5).

9. A vibration damper according to any of Claims 3 to 8, characterized in that the sleeve (7) is composed of a self-lubricating synthetic material.

## Revendications

1. Amortisseur de vibrations, comprenant une masse d'amortissement (2) disposée de manière mobile sur au moins un élément élastique (1) en matière élastomère et pouvant être mise en mouvement de manière déphasée par rapport aux vibrations déclenchées pendant la marche, l'élément élastique (1) étant fixé sur au moins une pièce (4) produisant les vibrations, caractérisé en ce que, pour compenser les effets de la température, un ressort supplémentaire (5), monté en parallèle, est ajouté à l'élément élastique (1), ressort (5) dont la raideur peut être modifiée grâce à un moyen auxiliaire (6).

2. Amortisseur de vibrations selon la revendication 1, caractérisé en ce que le ressort supplémentaire (5) a une raideur qui augmente à mesure que la température s'élève.

3. Amortisseur de vibrations selon les revendications 1 à 2, caractérisé en ce que le ressort supplémentaire (5) est en gomme élastique et en ce que le moyen auxiliaire (6) comprend une douille (7) sensiblement tubulaire, mobile, le cas échéant, de manière transversale à la direction des vibrations (3) déclenchées et qui peut être déplacée sur le ressort supplémentaire (5) par un entraînement.

4. Amortisseur de vibrations selon la revendication 3, caractérisé en ce que la douille (7) couvre complètement, le cas échéant, le ressort supplémentaire (5) et est découplée de l'élément élastique (1).

5. Amortisseur de vibrations selon les revendications 3 à 4 caractérisé en ce que l'entraînement de la douille (7) est formé par un élément en matière expansible (9) agissant contre un ressort de rappel (8) et en ce que l'élément en matière expansible (9) a un volume qui augmente lors d'un réchauffement et qui diminue lors d'un refroidissement.

6. Amortisseur de vibrations selon les revendications 3 à 4 caractérisé en ce que l'entraînement de la douille (7) est formé par un servomoteur à commande électrique, qui est relié, par une liaison de signalisation, à une unité de commande et à une sonde de température pour l'élément élastique (1).

7. Amortisseur de vibrations selon les revendications 3 à 4, caractérisé en ce que l'entraînement de la douille (7) est formé par un ressort bimétallique.

8. Amortisseur de vibrations selon les revendications 3 à 7, caractérisé en ce que la douille (7) est pourvue, au moins sur le côté intérieur (10) situé du côté du ressort supplémentaire (5), d'un revêtement superficiel réduisant les frottements.

9. Amortisseur de vibrations selon les revendications 3 à 8, caractérisé en ce que la douille (7) est faite dans une matière plastique autolubrifiante.
